# EUROPEAN PATENT APPLICATION

(11) **EP 3 199 221 A1**
(43) Date of publication of application: **02.08.2017**
(21) Application number: 16152908.6
(22) Date of filing: 27.01.2016
(51) Int. Cl.: B01D 47/00, B01D 47/06, B01D 47/16, B01D 50/00

(54) **WET-TYPE AIR CLEANER**

(71) Applicant: Huang, Tien-Zan, Taipei 103 (TW)
(72) Inventor: Huang, Ching Yuan, 103 Taipei (TW)
(74) Representative: Banzer, Hans-Jörg

(57) **Abstract**

A wet-type air cleaner (100) comprises a storage tank (130), a filter tank (160), a housing (190), a gas collecting structure (195), a turbine (200), and a plurality of brackets (220). The storage tank (130) comprises a spray pipe (121) and a water transmission pipe (122). The filter tank (160) has a top portion (140), at least two side portions (145; 155), and a bottom portion (150), and comprises an air outlet (143); at least two side covers (146); a plurality of filter layer (141); and a sewage pipe (152). The housing (190) comprises an inlet (170); a vertical body (180); a circular body (175); and a horizontal body (185) having a plurality of pores (186); reinforcing structure (188); and at least one outfall (187). The turbine (200) comprises a power source (205), wherein the water transmission pipe (122) extends into the filter tank (160), the spray pipe (121) extends to the inlet (170) of the housing (190), the circular body (175) is located below the storage tank (130) and above the filter tank (160), a height of a part of the vertical body (180) overlaps with the height of the plurality of filter layers (141), and a height of the horizontal body (185) is located below the height of the plurality of filter layer (141).

## Description

### Field of the Invention

The present invention relates to a wet-type air cleaner.

### Background of the Invention

With industrial development, gasoline, diesel fuel, coal, or gas become a common source of energy. However, the falling of air quality is indeed an indisputable fact. Take gasoline, diesel fuel, coal, or gas for example, the gases exhausted through incomplete combustion not only contain large amounts of carbon so as to become smoke, but also contain toxic gases such as carbon monoxide, nitric oxide, nitrogen dioxide, and sulfur dioxide harmful to human bodies. When these gases are absorbed into human bodies, it is easy to cause diseases such as headache, dizziness, sore throat, asthma, and cancer.

In addition, gases exhausted from factories not only cause damages to human bodies, but also to crops. These pollution sources have caused the air of the entire human living environment to be polluted and the temperature of that to be increased. The commonly known global warming is the phenomenon that the atmosphere and oceans on earth are affected due to the greenhouse effect so that the temperature rises and the climate changes, in which the content of carbon dioxide and other greenhouse gases continually increase, while the icebergs of the north and south poles are accelerated to dissolute.

Therefore, if dust in the air can be effectively collected, air quality can be improved. Conventional technology lacks effective dust filtration for outdoor chimney or large indoor space. In view of this, a wet-type air cleaner is needed so that the dust can be more effectively filtered from the air and the speed of the environmental air pollution and the greenhouse effect reduce.

### Summary of the Invention

An aspect of the present invention is to provide a wet-type air cleaner to solve the above problems encountered by prior art.

A wet-type air cleaner comprises a storage tank, a filter tank, a housing, a gas collecting structure, a turbine, and a plurality of brackets. The storage tank comprises a spray pipe and a water transmission pipe disposed at a bottom portion of the storage tank. The filter tank has a top portion, at least two side portions, and a bottom portion, and comprises an air outlet disposed at one of the at least two side portions adjacent to the top portion of the filter tank; at least two side covers disposed at the at least two side portions of the filter tank; a plurality of filter layer disposed in the filter tank, a height of which corresponding to that of the at least two side covers; and a sewage pipe disposed at the bottom portion of the filter tank. The housing comprises an inlet disposed at an opposite side of the one of the at least two side portions of the filter tank; a vertical body; a circular body disposed between the inlet and the vertical body of the housing; and a horizontal body having an upper half portion and a lower half portion. The horizontal body is connected to the vertical body, and comprises a plurality of pores spread over the upper half portion of the horizontal body and a part of the lower half portion of the horizontal body; reinforcing structure disposed at the lower half portion of the horizontal body; and at least one outfall disposed at the lower half portion of the horizontal body. The gas collecting structure is disposed at the inlet of the housing. The turbine is disposed in the circular body of the housing, and comprises a power source. The plurality of brackets support the storage tank, the filter tank, the housing, and the turbine, wherein the water transmission pipe extends into the filter tank, the spray pipe extends to the inlet of the housing, the circular body is located below the storage tank and above the filter tank, a height of a part of the vertical body overlaps with the height of the plurality of filter layers, and a height of the horizontal body is located below the height of the plurality of filter layer.

The present invention utilizes the configuration of the above structure to complete a wet-type air cleaner overcoming the problems of the prior art. As a result, this wet-type air cleaner achieves effects of dust absorbing-washing, air filtering, and decreasing the air temperature by using the present invention.

### Brief Description of the Drawings

Fig. 1 is a cross-sectional view showing the wet-type air cleaner of an embodiment in accordance with the present invention.
Fig. 2 is a cross-sectional view showing the wet-type air cleaner of the present invention along a line segment A-A in Fig. 1.
Fig. 3 is a cross-sectional view showing the wet-type air cleaner of another embodiment in accordance with the present invention.
Fig. 4 is a cross-sectional view showing the wet-type air cleaner of the other embodiment in accordance with the present invention.

### Detailed Description of the Invention

Hereafter, a plurality of embodiments of the present invention will be disclosed with drawings. For the purposes of a clear description, many practical details will together be described below. However, it should be understood that these practical details are not for restricting the present invention. That is to say, in parts of the embodiments of the present invention, these practical details are not necessary. In addition, for the sake of simplifying figures, some conventional structures and elements in figures will be shown in a simple schematic manner.

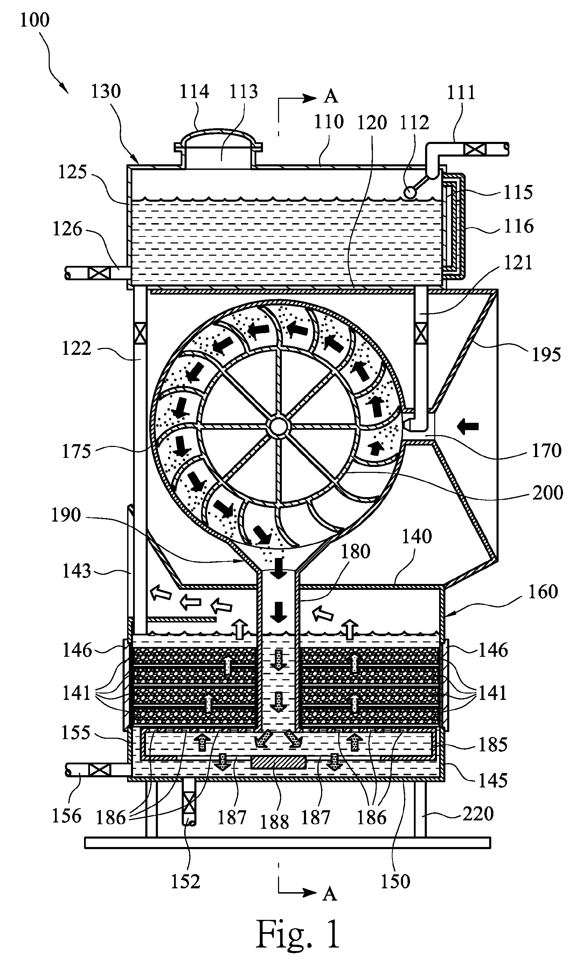

Fig. 1 is a cross-sectional view showing the wet-type air cleaner of an embodiment in accordance with the present invention. As shown in Figures, in the present embodiment, a wet-type air cleaner 100 comprises a storage tank 130, a filter tank 160, a housing 190, a gas collecting structure 195, a turbine 200, and a plurality of brackets 220. The storage tank 130 comprises a spray pipe 121 and a water transmission pipe 122 disposed at a bottom portion 120 of the storage tank 130.

The filter tank 160 has a top portion 140, a side portion 145, a side portion 155, and a bottom portion 150, and comprises an air outlet 143 disposed at one of the side portion 155 adjacent to the top portion 140 of the filter tank 160; side covers 146 disposed at a side portion 145 and a side portion 155 of the filter tank 160; four filter layers 141 disposed in the filter tank 160, a height of which corresponding to that of the side covers 146; and a sewage pipe 152 disposed at the bottom portion 150 of the filter tank 160. Through the side covers 146, filter layers 141 can be exchanged anytime.

Filter layers 141 can be any type of filtering material. For example, activated carbon, zeolite, and cotton yarn. It should be understood that the quantity of the filter layers 141 can be flexibly selected by choosing various types of filtering material depending on the actual needs of the filtering for a person of ordinary skill in the art of the present invention so as to improve the filtering effect of the filter layers 141.

The housing 190 comprises an inlet 170 disposed at an opposite side of the side portion 155 of the filter tank 160; a vertical body 180; a circular body 175 disposed between the inlet 170 and the vertical body 180 of the housing 190; and a horizontal body 185 having an upper half portion and a lower half portion. The horizontal body 185 is connected to the vertical body 180, and comprises a plurality of pores 186 spread over the upper half portion of the horizontal body 185 and a part of the lower half portion of the horizontal body 185; reinforcing structure 188 disposed at the lower half portion of the horizontal body 185; and outfall 187 disposed at the lower half portion of the horizontal body 185. The outfall 187 is an impurity exit for the filter tank 160 to discharge dirt.

The gas collecting structure 195 is disposed at the inlet 170 of the housing 190. The turbine 200 is disposed in the circular body 175 of the housing 190, and comprises a power source 205. The brackets 220 support the storage tank 130, the filter tank 160, the housing 190, and the turbine 200.

The water transmission pipe 122 extends into the filter tank 160 as a water supply source for the high water level of the filter tank 160. When the water level is at the level identical to that the opening of the water transmission pipe 122, water will not continually be supplied to the filter tank 160. The spray pipe 121 extends to the inlet 170 of the housing 190, the circular body 175 is located below the storage tank 130 and above the filter tank 160, a height of a part of the vertical body 180 overlaps with the height of the plurality of filter layers 141, and a height of the horizontal body 185 is located below the height of the plurality of filter layer 141.

As shown in Fig. 1, in the present embodiment, dust particles in the direction of the arrows as shown are through a complete cycle to achieve the effect of dust absorbing-washing and air filtering. First, the air containing dust particles is collected through the gas collecting structure 195 and enters into the inlet 170 of the housing 190. At the inlet 170, the spray pipe 121 performs spraying so that the dust particles are mixed with water molecules, so as to be more easily rolled into the circular body 175 of the housing 190 by the turbine 200 on operating. Dust particles mixed with water molecules and the air pass through the vertical body 180 and fall into the water and outfall 187 dispersed onto both sides of the horizontal body 185 after being contacted with the reinforcing structure 188 of the horizontal body 185. Since the dust particles are heavier than the water, and the air is lighter than the water, the air and the dust particles are separated here. The air rises toward the upper half portion of the horizontal body 185, while the dust particles sink toward the lower half portion of the horizontal body 185. Dust particles drop to the bottom portion 150 of the filter tank 160 through the up through the outfall 187 of the lower half portion to accumulate, and are discharged through the sewage pipe 152. As for the air, they pass through the pores 186 of the upper half portion and through four filter layers 141 so as to obtain the effect of filtering toxic or harmful gases. Finally, the filtered air is exhausted from the air outlet 143 of the filter tank 160. It should be understood that the air outlet 143 and the inlet 170 must be oppositely disposed so that the air before and after being filtered are clearly spaced apart.

In the present embodiment, through the operation of the turbine 200, the air filtration efficiency is considerable. Generally, the turbine 200 may filter an amount of 1000 liters of the air by operating one revolution. As an amount of 1800 revolutions per minute (RPM) is considered, the filtered air per the month reaches up to 77.76 billion liters. Further, since the specific heat of water is much larger than the air, in the case where the air is exhausted through the water, the temperature of the air can be decreased. In summer, the temperature may reach more than about 40°C. With the present embodiment, the temperature of the exhausted air can be decreased.

As shown in Fig. 1, in the present embodiment, the storage tank 130 further has a top portion 110, a side portion 115, and a side portion 125, and further comprises an inlet pipe 111 disposed at the top portion 110 of the storage tank 130; a drifter switch 112 connected to the inlet pipe 111; an upper opening 113 disposed at the top portion 110 of the storage tank 130; an upper cover 114 disposed over the upper opening 113; a water level display pipe 116 disposed at the side portion 115 of the storage tank 130; and a drain pipe disposed at an opposite side of the one of the at least two side portions adjacent to the bottom portion of the storage tank. Moreover, the filter tank 160 further comprises an intake 156 disposed at the side portion 155. The intake 156 is a main water supply source for the filter tank 160. By the intake 156 and the sewage pipe 152, a circulating flow is formed in the filter tank 160 so that the water temperature can constantly be kept at a cooling state.

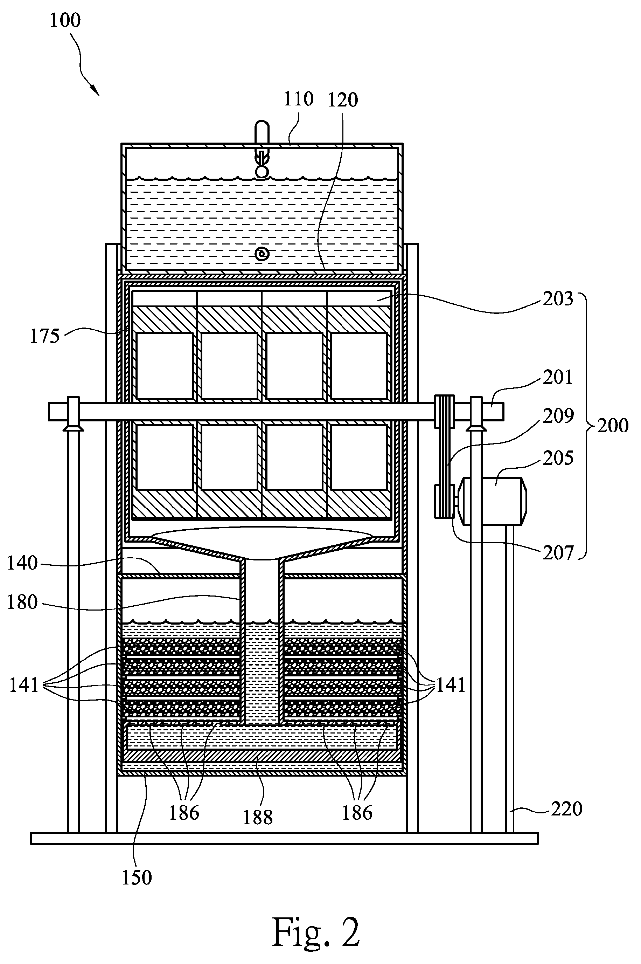

Fig. 2 is a cross-sectional view showing the insect-trapping device of the present invention along a line segment A-A in Fig. 1. As shown in Fig. 2, in the present embodiment, the turbine 200 further comprises a turbine shaft 201; and four fan sets 203 connected on the turbine shaft 201; wherein the bracket 220 supports the turbine 200 on the one hand and is pivoted to the turbine shaft on the other hand so that the four fan sets can maintain rotated on the bracket 220. The power 205 is an electricity generator having a rotating shaft 201, wherein the turbine 200 further comprises a belt 209 connected between the turbine shaft 201 and the rotating shaft 207, wherein the power 205 is fixed on the bracket 220. It should be understood that the quantity of the four fan sets 203 can be flexibly selected depending on the actual needs of the filtering for a person of ordinary skill in the art of the present invention.

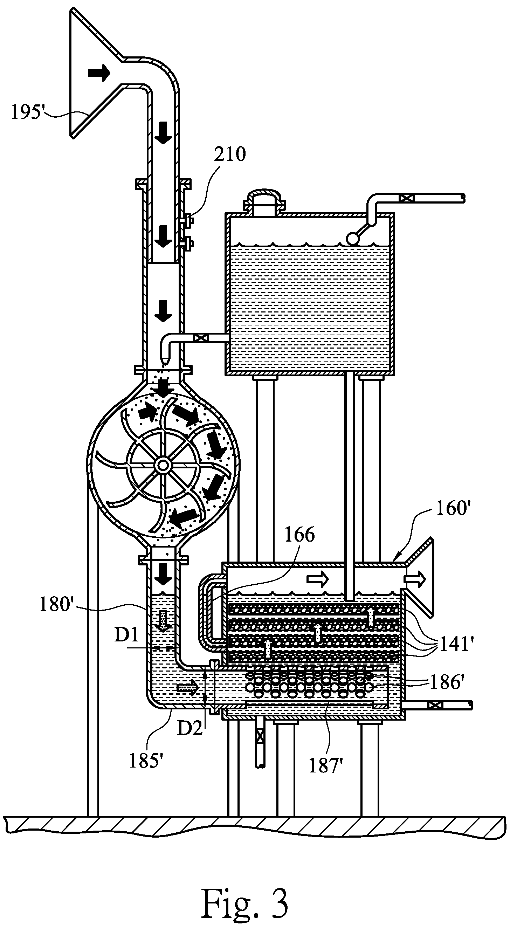

Fig. 3 is a cross-sectional view showing the wet-type air cleaner 100' of another embodiment in accordance with the present invention. As shown in Fig. 3, in the present embodiment, the vertical body 180' is not located in the filter tank 160', but extends into the filter tank 160' from the side portion adjacent to the bottom portion of the filter tank 160' through the horizontal body 185'. The configuration of the horizontal body 185' laterally connected to the filter tank 160' enlarges the coverage area so as to improve the efficiency of space utilization in the filter tank 160' and to result in more preferable performances of air filtering and dirt discharging. Moreover, in the configuration of the present embodiment, an inner diameter of the vertical body 180' is D1 and an inner diameter of the horizontal body 185' is D2, wherein D2 is larger than D1 so as to improve the effect of exhausting.

As shown in Fig. 3, in the present embodiment, the filter tank 160' further comprises a water level display pipe 166 disposed at the side portion of the filter tank 160'. Moreover, the wet-type air cleaner 100' further comprises a height adjusting mechanism 210. It should be understood that of the height adjusting mechanism 210 can be flexibly used depending on the actual needs of space, size, environment, and topography for a person of ordinary skill in the art of the present invention so that the gas collecting structure 195' is adjusted to the most preferable height. For example, the gas collecting structure 195' is adjusted to the height matching that of a chimney of a factory to perform dust absorbing and washing for gases exhausted from the factory more effectively.

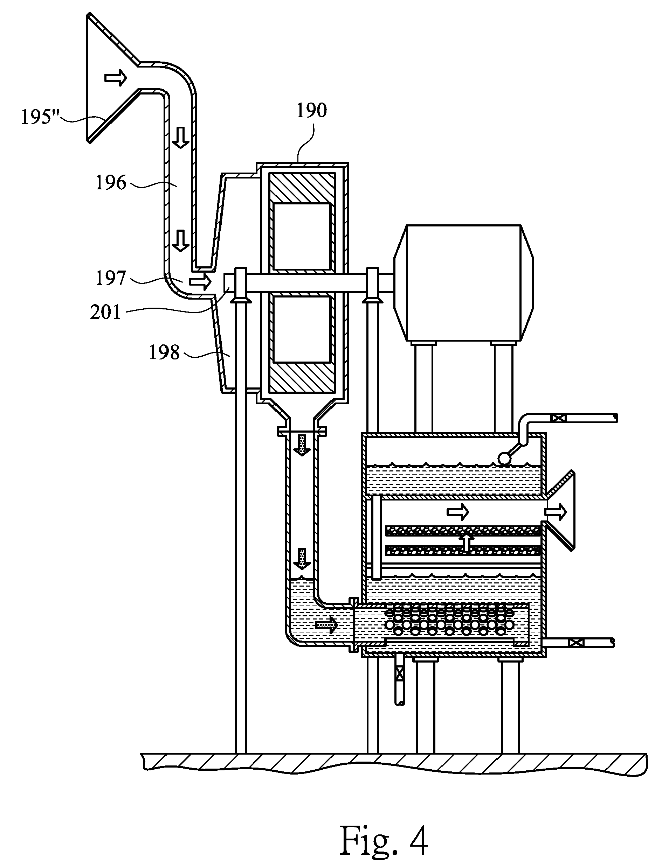

Fig. 4 is a cross-sectional view showing the wet-type air cleaner of the other embodiment in accordance with the present invention. As shown in Fig. 4, in a preferable embodiment, a gas collecting structure 195" comprises a vertical channel 196, a horizontal channel 197, and a transitional structure 198. Before the air containing dust particles is rolled into the housing 190, it is collected sequentially through the gas collecting structure 195", the vertical channel 196, the horizontal channel 197, and the transitional structure 198. The transitional structure 198 is a structure transitioning from the horizontal channel 197 to the housing 190. Specifically, the horizontal channel 197, the transitional structure 198, and the rotating shaft 201 are coaxial to each other. This configuration causes the present invention to achieve a preferable air filtration efficiency.

The present invention utilizes the configuration of the structure of the above embodiments to overcome the problems of the prior art. To sum up, this wet-type air cleaner 100 has effects of dust absorbing and washing, air filtering, and reducing the temperature of air, along with environmental protection and economic benefits.

Although the present invention has been disclosed with the above embodiments, they do not limit the present invention. People skilled in this art can make various modifications and retouches without departing from the spirit and scope of the invention. Accordingly, the scope protecting by the present invention shall be based on the content defined by the appended claims.

## Claims

1. A wet-type air cleaner (100), comprising:
a storage tank (130), comprising
a spray pipe (121); and
a water transmission pipe (122) disposed at a bottom portion (120) of the storage tank (130);
a filter tank (160) having a top portion (140), at least two side portions (145, 155), and a bottom portion (150), comprising
an air outlet (143) disposed at one of the at least two side portions (145, 155) adjacent to the top portion (140) of the filter tank (160);
at least two side covers (146) disposed at the at least two side portions (145, 155) of the filter tank (160);
a plurality of filter layer (141) disposed in the filter tank (160), a height of which corresponding to that of the at least two side covers (146); and
a sewage pipe (152) disposed at the bottom portion (150) of the filter tank (160);
a housing (190), comprising
an inlet (170) disposed at an opposite side of the one of the at least two side portions (145, 155) of the filter tank (160);
a vertical body (180; 180');
a circular body (175) disposed between the inlet (170) and the vertical body (180; 180') of the housing (190); and
a horizontal body (185; 185') having an upper half portion and a lower half portion, the horizontal body (185; 185') connected to the vertical body (180; 180'), comprising
a plurality of pores (186) spread over the upper half portion of the horizontal body (185; 185') and a part of the lower half portion of the horizontal body (185; 185');
reinforcing structure (188) disposed at the lower half portion of the horizontal body (185; 185'); and
at least one outfall (187) disposed at the lower half portion of the horizontal body (185; 185');
a gas collecting structure (195; 195') disposed at the inlet (170) of the housing (190);
a turbine (200) disposed in the circular body (175) of the housing (190), comprising a power source (205); and
a plurality of brackets (220) supporting the storage tank (130), the filter tank (160), the housing (190), and the turbine (200),
wherein the water transmission pipe (122) extends into the filter tank (160), the spray pipe (121) extends to the inlet (170) of the housing (190), the circular body (175) is located below the storage tank (130) and above the filter tank (160), a height of a part of the vertical body (180; 180') overlaps with the height of the plurality of filter layers (141), and a height of the horizontal body (185; 185') is located below the height of the plurality of filter layer (141).

2. A wet-type air cleaner according to claim 1, wherein the storage tank further has a top portion (110) and at least two side portions (115; 125), and further comprises
an inlet pipe (111) disposed at the top portion (110) of the storage tank (130);
a drifter switch (112) connected to the inlet pipe (111);
an upper opening (113) disposed at the top portion (110) of the storage tank (130);
an upper cover (114) disposed over the upper opening (113);
a water level display pipe (116) disposed at one of the at least two side portions (115; 125) of the storage tank (130); and
a drain pipe disposed at an opposite side of the one of the at least two side portions (115; 125) adjacent to the bottom portion (120) of the storage tank (130).

3. A wet-type air cleaner according to claim 1, wherein the filter tank (160') further comprises
an intake (156) disposed at an opposite side (155) of one of the at least two side portions (145; 155) adjacent to the bottom portion (150) of the filter tank (160); and
a water level display pipe (166) disposed at one of the at least two side portions (145; 155) of the filter tank (160').

4. A wet-type air cleaner according to claim 1, wherein the turbine (200) further comprises
a turbine shaft (201); and
at least one fan set (203) connected on the turbine shaft (201);
wherein the at least one bracket (220) is pivoted to the turbine shaft (201) so that the plurality of the fan set (203) can maintain rotated on the bracket (220).

5. A wet-type air cleaner according to claim 4, wherein the power (205) is an electricity generator having a rotating shaft (201).

6. A wet-type air cleaner according to claim 5, wherein the turbine (200) further comprises a belt (209) connected between the turbine shaft (201) and the rotating shaft (207).

7. A wet-type air cleaner according to claim 1, wherein the power (205) is fixed on the plurality of brackets (220).

8. A wet-type air cleaner according to claim 1, wherein an inner diameter (02) of the horizontal body (185') is larger than an inner diameter (01) of the vertical body (180').

9. A wet-type air cleaner according to claim 1, further comprising a height adjusting mechanism (210) for the gas collecting structure (195').
